# EUROPÄISCHE PATENTSCHRIFT

(11) **EP 3 887 202 B1**
(45) Veröffentlichungstag und Bekanntmachung des Hinweises auf die Patenterteilung: **10.01.2024**
(21) Anmeldenummer: 20772307.3
(22) Anmeldetag: 17.09.2020
(51) Int. Cl.: A62C 3/07, A62C 3/16, B60P 3/12, B60P 1/54, B60P 3/14, B66C 1/12, B66C 1/20, B66F 19/00

(54) **VERFAHREN ZUM ABTRANSPORT UND ZUR PASSIVIERUNG HAVARIERTER KRAFTFAHRZEUGE**
METHOD FOR TRANSPORTING AWAY AND FOR RENDERING HARMLESS DAMAGED MOTOR VEHICLES
PROCÉDÉ POUR TRANSPORTER ET RENDRE SANS DANGER DES VÉHICULES AUTOMOBILES ENDOMMAGÉS

(30) Priorität: 17.09.2019 DE 102019124998; 23.09.2019 DE 102019125510
(43) Veröffentlichungstag der Anmeldung: 06.10.2021
(73) Patentinhaber: Vetter GmbH, 53909 Zülpich (DE)
(72) Erfinder: STEINHAUSER, Leo, 88451 Dettingen/Iller (DE)
(74) Vertreter: Patentanwälte Bauer Vorberg Kayser
(86) Internationale Anmeldenummer: PCT/EP2020/075969
(87) Internationale Veröffentlichungsnummer: WO 2021/053067

(56) Entgegenhaltungen:
- EP-A1- 3 263 402
- EP-A1- 3 473 301
- WO-A1-03/020611
- WO-A1-2013/117229
- WO-A1-2018/222046
- DE-A1-102019 003 289
- DE-U1-202016 001 072
- DE-U1-202019 002 829
- FR-A1- 2 860 776
- GB-A- 2 005 604
- GB-A- 2 393 943
- US-A- 4 315 535
- US-A1- 2007 176 462
- US-B1- 6 405 862
- US-B1- 6 517 141
- US-B1- 8 684 437

## Beschreibung

Die Erfindung bezieht sich auf ein Verfahren zum Abtransport und zur Passivierung havarierter Kraftfahrzeuge.

Aus EP 3 263 402 A1 sind ein Behälter und ein Verfahren zum Bergen havarierter Fahrzeuge mit elektrischem Antrieb bekannt. Als Behälter wird ein starrer, oben offener Container verwendet, in den mittels einer Ziehvorrichtung das havarierte Fahrzeug durch eine geöffnete Seite hineingezogen wird. Der Behälter wird danach seitlich geschlossen, er bleibt nach oben offen. Er wird mit Wasser gefüllt. In diesem Zustand erfolgt der Abtransport. Der relativ große, sperrige Behälter lässt bereits im leeren Zustand nur schwer zu einer Unfallstelle transportieren, noch schwieriger ist der Abtransport im gefüllten Zustand. Das Wasser kann sich dabei im Behälter hin und her bewegen und überschwappen. Das als Löschmittel eingesetzte Wasser wird in der Regel kontaminiert, der Behälter muss später grundlegend gereinigt werden. Der Behälter steht, solange sich das Fahrzeug in ihm befindet, für längere Zeit nicht für einen anderen Notfalleinsatz zur Verfügung. Der Behälter muss für einen Notfall jedes Mal gezielt angefordert werden. Im praktischen Betrieb ist dies alles nachteilig.

Aus NO 20 161 913 A1 ist ein Verfahren zum Löschen eines brennenden E-Autos bekannt. Dabei wird das Feuer im Auto zunächst auf herkömmliche Weise gelöscht. Aufgrund der E-Fahrzeug-Batterien wird eine Decke mit faltbaren Abschnitten vorgesehen. Dabei weisen die Seiten eines jeden faltbaren Abschnitts Öffnungen zur Aufnahme eines Seils auf. Das Auto wird auf der Decke positioniert, die Seiten der faltbaren Abschnitten werden hoch geklappt und es wird mit einem durch die Öffnungen geführten Seil eine Wanne geformt. Diese Wanne wird zum Kühlen der Batterien mit Wasser gefüllt.

Die DE 20 2019 002 829 U1 betrifft einen Lösch- und Transport-Behälter für Fahrzeuge in einer leichten Ausführung, wobei der Transportbehälter aus flexiblem Material besteht.

Hier setzt nun die Erfindung ein. Sie hat es sich zur Aufgabe gemacht, einen handlicheren Behälter und ein praktischer durchführbares Verfahren zum

Abtransport havarierter, elektrisch angetriebener Fahrzeuge anzugeben und die Nachteile des Standes der Technik zu vermeiden.

Diese Aufgabe wird durch ein Verfahren nach Anspruch 1 gelöst. Ein Verfahren zum Abtransport und zur Passivierung eines havarierten, elektrisch angetriebenen Kraftfahrzeugs umfasst folgende Verfahrensschritte:
A. Bereitstellen eines faltbaren, flüssigkeitsdichten Sacks, der a) Innenabmessungen aufweist, die größer sind als die Außenabmessungen des Kraftfahrzeugs, und der b) einen Boden und eine mit diesem verbundene Seitenwand aufweist, wobei auf der Innenseite des Bodens zumindest eine einzige Markierung zur mittigen Positionierung der Mitte der Autofront des Kraftfahrzeugs vorgesehen ist,
B. Anordnen des Sacks unter dem Kraftfahrzeug,
C. Anheben des Kraftfahrzeugs, so dass alle Räder des Kraftfahrzeugs in der Luft sind, und Durchziehen der Seitenwand unter den Rädern, so dass sich nur noch der Boden unterhalb der Räder befindet, und Ablassen des Fahrzeugs, so dass die Räder in Kontakt mit dem Boden sind,
D. Anheben der Seitenwand rings um das Kraftfahrzeug und Sichern des Sacks in diesem Zustand,
E. Einfüllen von Wasser in den Sack,
F. Gegebenenfalls Anheben des so befüllten Sacks mittels einer, vorzugsweise fahrbaren, Hebevorrichtung und Transport zu einem Lagerplatz, und G. Ruhenlassen des befüllten Sacks für mindestens einige Stunden, vorzugsweise 72 Stunden.

Hierzu kann eine Vorrichtung zum Transport eines havarierten, elektrisch angetriebenen Kraftfahrzeugs genutzt werden, die einen faltbaren, flüssigkeitsdichten Sack aufweist, der a) Innenabmessungen hat, die größer sind als die Außenabmessungen des Kraftfahrzeugs, und der b) einen Boden und eine mit diesem verbundene Seitenwand aufweist, wobei die Seitenwand eine vom Boden aus gemessene Höhe aufweist, die größer ist als die Höhe des Kraftfahrzeugs und insbesondere im Bereich von 2 bis 4,5 m liegt.

Das Verfahren und die Vorrichtung bringen den Vorteil, dass der für die Aufnahme des Kraftfahrzeugs vorgesehene Behälter im ungefüllten Zustand relativ klein ist. Er kann zusammengefaltet bzw. -gepackt werden. Er kann in einem normalen Feuerwehrwagen transportiert werden. Lediglich für den Abtransport ist ein größeres Fahrzeug notwendig, hier kann ein handelsübliches Fahrzeug verwendet werden, das eine Hebevorrichtung hat. Der Abtransport ist dadurch vereinfacht, dass das Wasser im Behälter bleibt und nicht überschwappt. Der Behälter nach der Erfindung ist vorzugsweise im Wesentlichen oben abgeschlossen. Er ist vorzugsweise nur an einem Punkt, insbesondere einem Seil oder einer Kette, mit der Hebevorrichtung verbunden. Es kann auch ein Netz, vorzugsweise ein engmaschiges Netz, eingesetzt werden, um etwa auch die Verbindung des Sacks zur Hebevorrichtung auszubilden. So kann ein solches Netz um den Sack herum angeordnet sein und diesen umschließen, sodass über die Maschen des Netzes auch mehrere Angriffspunkte an das gesamte System des Sacks mit darin befindlichem havariertem Kraftfahrzeug bereitgestellt sind. Hierzu können in vorteilhafter Weise Lastentransportnetze eingesetzt werden. Die Verbindung mit der Hebevorrichtung muss nicht starr ausgebildet sein. Beim Transport kann er somit pendeln, auch hierdurch wird ein Überschwappen verhindert.

In dem Verfahrensschritt C., in dem das Kraftfahrzeug angehoben wird, erfolgt dieses Anheben schrittweise. So wird nach dem Anordnen des Sacks unter dem Kraftfahrzeug auch zunächst lediglich eine Seite des Kraftfahrzeugs, also lediglich zwei seitliche Räder des Kraftfahrzeugs, angehoben, und wird sodann ein entsprechender seitlicher Teil der Seitenwände unter diesen zwei seitlichen Rädern bzw. dieser angehobenen Seite des Kraftfahrzeugs durchgezogen. Sodann wird dieser seitliche Teil des Kraftfahrzeugs auch bereits wieder abgelassen, sodass diese beiden seitlichen Räder bereits in Kontakt mit dem Boden des Sacks sind. Sodann werden die andere, gegenüberliegende Seite des Kraftfahrzeugs bzw. die dortigen beiden seitlichen Räder angehoben und der entsprechend zugeordnete Teil der Seitenwand hierunter durchgezogen und der Teil des Fahrzeugs sodann wieder abgelassen, sodass auch ein Kontakt dieses Teils des Fahrzeugs zum Boden des Sacks besteht. Dabei kann es durch den Unfall selbstverständlich auch vorkommen, dass gar kein Rad mehr oder nur noch wenige Räder vorhanden sind. Dann wird das vorschlagsgemäße Verfahren eben so ausgeführt, dass die entsprechenden Fahrzeugseiten angehoben werden und die Seitenwand des Sacks dort unter der entsprechenden Seite durchgezogen und diese Fahrzeugseite sodann wieder abgelassen wird. Zu diesem teilweisen Anheben einer Seite eines Fahrzeugs können besonders vorteilhaft Hebekissen verwendet werden.

In dem Verfahrensschritt E. können beispielhaft mindestens 5 m³, weiter bevorzugt mindestens 10 m³, Wasser eingefüllt werden.

Das Verfahrensmerkmal F. ist nicht zwingend erforderlich. Es wird zwar im Regelfall notwendig sein, den gefüllten Sack von einer Unfallstelle abzutransportieren, es sind aber auch Fälle denkbar, in denen kein Transport notwendig ist. In diesen Fällen kann der gefüllte Behälter an seinem Ort verbleiben, bis Merkmal G. erfüllt ist. So kann beispielsweise das havarierte Fahrzeug, bevor es in den Sack eingebracht wird, noch eine gewisse Strecke geschleppt werden zu einem Ort, wo der gefüllte Sack gemäß Merkmal G. verweilen kann. Oder aber das havarierte Fahrzeug kann direkt an seinem Unfallort bzw. an dem Ort seines havarierten Zustands in den Sack gefüllt und gemäß vorgeschlagenem Verfahren ohne den Verfahrensschritt F. gegen den Ausbruch eines erneuten Brandes gesichert werden. Ein Beispiel hierfür ist etwa eine Tiefgarage oder ein Parkhaus bzw. ein Parkplatz, also ein Ort, an dem das Kraftfahrzeug bereits stehend bzw. geparkt gegen erneuten sich Entzünden gesichert werden muss. Dann entfällt auch die Notwendigkeit des Anhebens und Abtransports des Sacks mit Fahrzeug und Wasser gemäß Verfahrensmerkmal F. Wenn der Sack nicht für ein Anheben gemäß Merkmal F. ausgelegt sein muss, genügt eine weniger reißfeste Folie, insbesondere für seine Seitenwand. In vorteilhafter Weise wird der Sack jedoch regelmäßig eine ausreichende Reißfestigkeit und Stärke aufweisen, um für den Abtransport geeignet zu sein, um auf diese Weise dem Anwender vor Ort für jegliche Einsatzmöglichkeit maximale Flexibilität zu gewährleisten.

Im Rahmen des Abtransportes des Verfahrensschrittes F. wird vorzugsweise eine fahrbare Hebevorrichtung, beispielsweise ein mobiler Kran, eingesetzt.

Der als Behälter vorgeschlagene Sack ist deutlich leichter als ein Container, er ist weniger sperrig und schließlich kostengünstiger. Es können mehrere Behälter dieser Art in einem Rettungszentrum vorhanden sein, so dass kein Engpass auftreten sollte, wenn zwei oder drei Unfälle kurz nacheinander auftreten.

Unter dem Abtransport eines Kraftfahrzeugs wird insbesondere folgender Zustand verstanden: Das Kraftfahrzeug ist gelöscht. Es kann nun aus dem Unfallbereich wegtransportiert werden. Ein normales Abschleppfahrzeug ist hierfür unter Umständen ungeeignet. So hat es beim Abschleppen bereits einen erneuten Ausbruch des Brandes des Kraftfahrzeugs gegeben, der auf das Abschleppfahrzeug übergegriffen hat. Der Akkumulator muss also gekühlt werden, damit solche negativen Auswirkungen einer Selbstentzündung, also etwa ein Übergreifen eines erneuten Brandes gar auf ein Abschleppfahrzeug, verhindert wird. Der Akkumulator kann dazu beispielsweise so weit heruntergekühlt bleiben, dass er eine Temperatur unterhalb seiner kritischen Zündtemperatur einhält. Durch das Einhüllen des Fahrzeugs bzw. des Akkumulators mit Wasser werden auch bereits die negativen Auswirkungen einer Selbstentzündung des Akkumulators unterbunden, selbst wenn sich dieser Akkumulator nochmals selbst entzünden sollte. Denn selbst wenn sich der Akkumulator unter Wasser selbst entzündet und auch brennt, dann wird durch die ausreichende Kühlung über die Wassermenge erreicht, dass der entzündete Akkumulator innerlich über mehrere Stunden bzw. Tage langsam brennt, bis alle Energie versiegt ist. Das schützende, den Akkumulator bzw. das Fahrzeug umgebende Wasser verhindert dabei jedoch dann erfolgreich ein Übergreifen des Brandes auf das restliche Kraftfahrzeug und somit auch auf ein eventuelles Abschleppfahrzeug.

Der Sack wird vorzugsweise aus einem ursprünglich bahnförmig vorliegenden Flachmaterial, im Folgenden als Folie bezeichnet, hergestellt, beispielsweise aus einer ausreichend reißfesten und gegebenenfalls armierten Kunststoff-Folie, einem gummierten Textiltuch. Der Sack kann einlagig, zweilagig oder auch mehrlagig sein. In der zweilagigen Ausbildung kann er beispielsweise aus einem äußeren Mantel, der nicht flüssigkeitsdicht ist, aber die Reißfestigkeit hat, und einem Innenmantel bestehen, der allein die hohe Last nicht tragen könnte, aber flüssigkeitsdicht ist.

Unter einem faltbaren Sack wird verstanden, dass der Sack in einem Verpackungszustand zu einem kleinstmöglichen Volumen gebracht werden kann, das im Wesentlichen, insbesondere zu mehr als einem Drittel, ausschließlich von seinem Material und ansonsten Luft bestimmt ist. Der Sack kann beispielsweise gerollt, zusammengerafft oder anderweitig zusammengelegt werden. Vorzugsweise wird er beim Verpacken in einer Längsrichtung gerollt, die mit der Längsrichtung eines Kraftfahrzeugs übereinstimmt. Dies erleichtert das Einbringen des angehobenen Kraftfahrzeugs in den Sack.

Der Sack weist einen Boden und eine mit diesem verbundene Seitenwand auf. Vorzugsweise kann zusätzlich auch noch eine Dachplane vorgesehen sein, sodass das gesamte System dann zwei Pläne bzw. Säcke oder Teil-Säcke aufweist. Vorzugsweise ist die den Boden und die Seitenwände bildende Plane bzw. dieser Sack oder Teil-Sack schwerer und stabiler ausgebildet als die Dachplane. Die Dachplane kann dann lediglich dazu ausgebildet sein, dass sie verhindert, dass Spritzwasser beim Abtransport des gesamten Systems austritt. Die den Boden und die Seitenwand ausbildende Plane bzw. dieser Sack kann auch separat von der Dachplane bzw. dem den Dachbereich ausbildenden Sack gelagert sein.

In dem Verfahrensschritt D., in welchem die Seitenwand angehoben und dann gesichert wird, kann das Sichern derart vorgenommen werden, dass der Boden und die Seitenwände des Sacks mit einer Dachplane miteinander verbunden werden. Auf diese Weise wird die den Boden und die Seitenwände des Sacks ausbildende Bodenplane über die Dachplane hochgebunden bzw. hochgesteckt. So ist das havarierte Kraftfahrzeug dann vollständig eingehüllt, wobei insbesondere eben der Boden und die Seitenwände den stabilen, flüssigkeitsdichten Sack ausbilden. Die Dachplane wiederum kann auch lediglich dem Sichern des Sacks dienen und die Seitenwände oben halten bzw. auch, wie zuvor beschrieben, dem Schutz gegen Austreten von Spritzwasser beim Abtransport dienen.

Im Allgemeinen wird davon ausgegangen, dass elektrisch angetriebene Kraftfahrzeuge 15 bis 25 kWh für eine Fahrstrecke von 100 km an Energie benötigen. Geht man von einer Energie (Kapazität) eines Akkumulators von 100 kWh aus und berücksichtigt, dass 1,16 KWh benötigt werden, um 1 m³ Wasser um 1 °C zu erwärmen, würden 10 m³ Wasser durch eine elektrische Energie von 100 kWh um etwas weniger als 10 °C erwärmt. Dabei ist jedoch von der elektrischen Energie ausgegangen worden, es wird davon ausgegangen, dass sie in einem Verhältnis von 1:10 zu der Wärmeenergie steht, die von einem Akkumulator, insbesondere Li-Ionen Akkumulator, ausgeht, der schon einmal gebrannt hat und heruntergekühlt wurde, und dessen Selbstentzündung verhindert werden muss. Ab welcher Temperatur ein die Selbstentzündung einleitender sogenannter Thermal Runaway entsteht, hängt von der Akkuzelle ab und von den Faktoren, die den Temperaturanstieg verursacht haben. Kritisch kann es bereits ab 60°C werden. Es ist daher vorzuziehen, dass das Wasser sich nicht über 60 °C erwärmt.

Wie bereits ausgeführt muss jedoch nicht zwingend die Selbstentzündung des Akkumulators verhindert werden, sondern lediglich die negativen Auswirkungen einer solchen potentiellen Selbstentzündung, indem der Akkumulator mit Wasser bedeckt bzw. ausreichend gekühlt ist. So muss lediglich erfolgreich verhindert werden, dass die potentielle Selbstentzündung des Akkumulators dazu führt, dass sich das Kraftfahrzeug erneut entzündet.

Unter Passivierung wird verstanden, dass das Kraftfahrzeug über eine ausreichend lange Zeit, man geht im Allgemeinen von 72 Stunden aus, im Wasser und damit gekühlt bleibt. Danach ist der Akkumulator in einem Zustand, in dem eine erneute Selbstentzündung nicht mehr zu befürchten ist. Für die Kühlung ist eine relativ große Menge an Wasser erforderlich, sie ist abhängig von der im Akkumulator gespeicherten Energie. Dies kann beim jeweiligen Einsatz bestimmt werden. Für ein Hybridfahrzeug oder einen Akkumulator unter 10 kWh kann es ausreichend sein, 5 m³ oder weniger Wasser einzusetzen. Es muss aber darauf geachtet werden, dass der Sack so weit mit Wasser gefüllt ist, dass der Akkumulator sich vollständig im Wasser befindet.

Das Kraftfahrzeug hat insbesondere folgende Merkmale, die einzeln aber auch in beliebiger Kombination realisiert sein können: Es hat einen elektrischen Antriebsmotor. Es hat einen Akkumulator, der für mindestens 10 km elektrische Fahrt, insbesondere mindestens 100 km elektrische Fahrt ausgelegt ist. Der Akkumulator ist ein Li-Ionen Akkumulator. Das Fahrzeug hat vier Räder. Es ist ein Pkw. Es ist straßenzugelassen. Es entspricht den allgemeinen Zulassungsbestimmungen für Straßenverkehr. Das Gesamtgewicht liegt unter 2 t.

Im Rahmen des Verfahrensschritts E. können beispielsweise mindestens 5 m³ Wasser, vorzugsweise mindestens 10 m³ Wasser, eingefüllt werden. Auch weniger Wasser kann jedoch bereits zum Ziel führen. Im Wesentlichen hängt die Wahl der Menge des Wassers von der Größe und vor allem Höhe des Kraftfahrzeugs und von der Platzierung des Akkumulators im Fahrzeug ab.

Das Verfahren hat den Vorteil, dass für das Anheben des Kraftfahrzeugs ein Druckluft-Hebekissen eingesetzt werden kann, wie es von der Anmelderin angeboten wird und in der Regel auf einem Feuerwehrwagen mitgeführt wird. Dieses Hebekissen wird zunächst in der Mitte einer Seite des Kraftfahrzeugs angesetzt und es werden die beiden Räder dieser Seite damit angehoben. Dies ermöglicht, den Sack, der sich mitten unter dem Kraftfahrzeug befindet, so weit nach außen zu ziehen, dass die angehobenen Räder sich über dem Boden befinden. Danach wird das Hebekissen wieder abgelassen, es wird nun auch der Bereich der Seitenwand nach außen gezogen, der bisher durch das Hebekissen nicht zugänglich war. Entsprechend wird auch auf der anderen Seite vorgegangen.

Das Verfahren nach Anspruch 2 hat den Vorzug, dass kritische Bereiche des Kraftfahrzeugs, die die Folie des Sacks verletzen könnten, abgepuffert und damit geschützt werden. Alternativ hierzu kann auch vorgesehen sein, dass bei dem vorschlagsgemäßen Verfahren, zunächst scharfe, abstehende Kanten an dem Kraftfahrzeug abgeschnitten oder entsprechend verbogen werden müssen, um den Sack bzw. die verwendete Plane zu schützen. Alternativ können diese Schritte auch kombiniert werden, sodass zunächst scharfe, abstehende Kanten des Kraftfahrzeugs abgeschnitten und/oder verbogen werden, und dass sodann diese Stellen abgedeckt werden. Auch eine Kombination aus Abdecken von einigen Stellen und Umbiegen bzw. Abschneiden (und gegebenenfalls zusätzlichem Abdecken) anderer Stellen ist möglich.

Das Verfahren nach Anspruch 3 hat den Vorzug, dass Steine und andere kritische Gegenstände, die sich unter den Rädern des Kraftfahrzeugs befinden, beim Ablassen des Kraftfahrzeugs nicht die Folie beschädigen können. Die Schutzeinrichtung wird insbesondere unter den Rädern eingesetzt. Verwendet werden können Matten, beispielsweise aus einem Gewebe, eingesetzt werden können auch leere Hebekissen oder Holzbretter.

Gemäß dem Verfahren nach Anspruch 4 wird der Sack oben durch das Sicherungsmittel weitgehend geschlossen, dort kann, muss aber nicht, eine Abdichtung erreicht werden. Das Sicherungsmittel bildet den einzigen Angriffspunkt für die Hebevorrichtung, der gefüllte Sack ist daher nur an einem einzigen Punkt aufgehängt. Das Sicherungsmittel soll möglichst die gesamte Seitenwand umfassen, über das Sicherungsmittel wird die Last möglichst gleichmäßig in die Seitenwand eingeleitet.

Es ist vorteilhaft, auf der Innenseite des Bodens Markierungen für Aufstandsflächen der Räder des Kraftfahrzeugs auszubilden. Beim Einbringen des Kraftfahrzeugs in den Sack wird damit ein klarer Hinweis gegeben, wie der Sack und insbesondere sein Boden auszurichten sind, bevor die Räder wieder abgelassen werden und danach die Seitenwand seitlich des Fahrzeugs hochgezogen wird.

Nach der Erfindung ist auf der Innenseite des Bodens auch eine einzige Markierung vorgesehen, beispielsweise ein Kreuz, auf welcher Markierung die Mitte der Autofront stehen soll, damit ein optimales Verpacken durch den Sack möglich ist. Dadurch wird vorteilhaft ein Hinweis zum Verpacken eines Kraftfahrzeugs unabhängig von der Breite und Länge des Fahrzeugs bereitgestellt.

Es ist vorteilhaft, im Bereich des Bodens oder der unteren Seitenwand ein Auslassventil im Sack vorzusehen. Über diesen Auslass kann der Sack entleert werden, wenn die Passivierung abgeschlossen ist. Es ist auch vorteilhaft, im oberen Bereich des Sacks, durch die vom Sicherungsmittel begrenzte obere Öffnung einen Schlauch zu führen, durch den z.B. das Wasser eingefüllt und/oder abgepumpt werden kann.

Der Beutel kann aus zwei rechteckigen Zuschnitten gefertigt sein, die U-förmig miteinander verbunden sind. Er kann auch aus einem im wesentlichen rechteckförmigen Zuschnitt für den Boden und mindestens einem weiteren Zuschnitt für die Seitenwand erstellt werden, diese Zuschnitte werden entsprechend miteinander verbunden, zum Beispiel verklebt und/oder vernäht. Alle Arten von Zuschnitten, wie sie zurzeit für die Herstellung von Beuteln und Zecken bekannt sind, können eingesetzt werden.

Ein nicht einschränkend zu verstehendes Ausführungsbeispiel der Erfindung und in diesem Zusammenhang eine Erläuterung des erfindungsgemäßen Verfahrens werden im Folgenden unter Bezugnahme auf die Zeichnung näher erläutert und beschrieben. In der Zeichnung zeigen die folgenden Figuren:
- Figur 1: eine Frontansicht eines verunfallten (= havarierten) Kraftfahrzeugs, unter dem sich bereits ein noch im Wesentlichen im Verpackungszustand befindlicher Sack befindet,
- Figur 2: eine Seitenansicht des Fahrzeugs von Figur 1, jedoch zusätzlich ist nun ein Hebekissen unter einer Seite des Kraftfahrzeugs angeordnet,
- Figur 3: eine Draufsicht auf das Fahrzeug, die Räder befinden sich nun nur noch über dem Boden des Sacks,
- Figur 4: eine Seitenansicht, die Seitenwand des Sacks ist nun teilweise angehoben,
- Figur 5: eine Frontansicht wie in Figur 1 des Sacks, in dem sich nun das Fahrzeug befindet, und
- Figur 6: eine prinzipielle Draufsicht auf einen Zuschnitt für den Sack.

Für die Beschreibung wird ein rechtshändiges, orthogonales x-y-z Koordinatensystem verwendet. Die positive x-Achse verläuft in der normalen Fahrtrichtung eines Kraftfahrzeugs 20. Die positive y-Achse befindet sich ebenfalls in der Ebene einer Straße 22, auf der sich das Fahrzeug 20 befindet. Die z-Achse geht rechtwinklig nach oben.

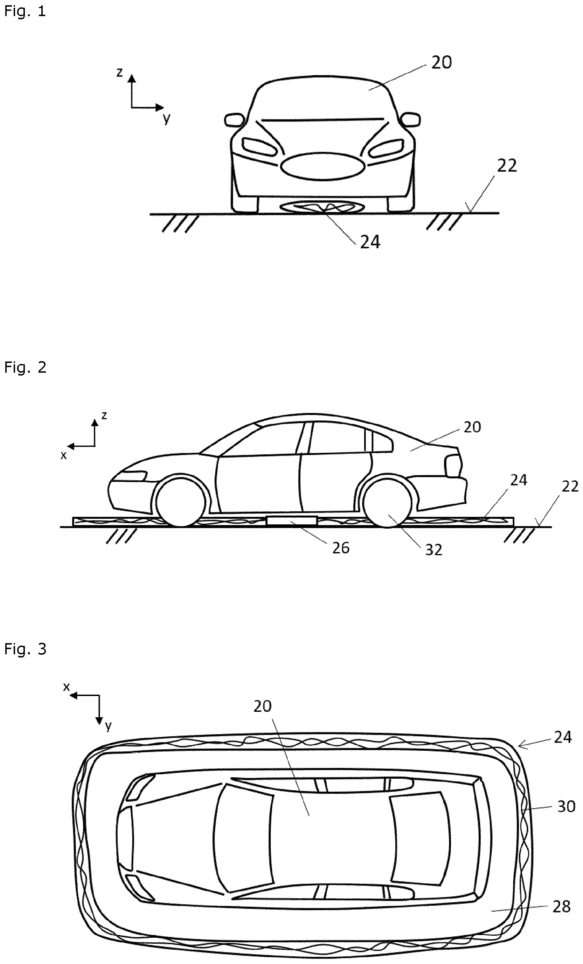

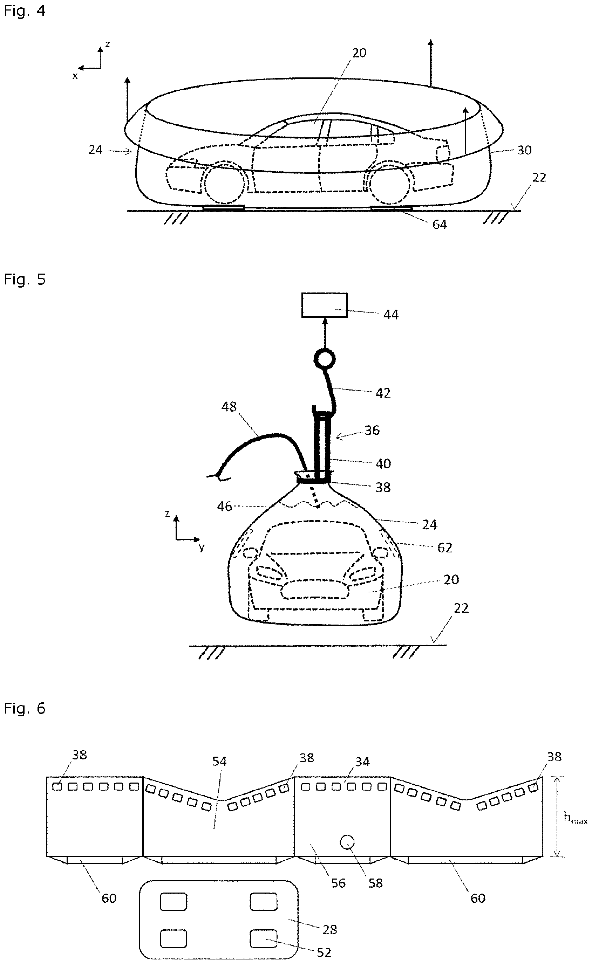

In Figur 1 ist entsprechend den Verfahrensmerkmalen A. und B. ein faltbarer, flüssigkeitsdichter Sack 24 im noch weitgehend zusammengepackten Zustand unter dem Fahrzeug 20 in x- Richtung verlaufend angeordnet worden. Dieser Sack 24 kann von einem Transportzustand, in dem er ein möglichst kleines Volumen einnimmt und daher in einem Rettungsfahrzeug gut untergebracht werden kann, in einen Einsatzzustand überführt werden, in dem er das Fahrzeug 20 in sich aufnehmen kann, wie die folgenden Figuren 3 bis 5 zeigen. Figur 2 zeigt, dass in dem noch weitgehend zusammengerollten Zustand die Enden des Sacks 24 vor und hinter dem Fahrzeug 20 überstehen. Der Sack 24 hat einen Boden 28 und eine umlaufende Seitenwand 30, siehe hierzu Figur 6.

In Figur 2 ist unter eine Seitenmitte des Fahrzeugs 20 ein handelsübliches Hebekissen 26 gelegt worden. Es ist noch nicht mit Luft gefüllt. Wenn es mit Luft gefüllt ist, wird es gemäß Merkmal C. möglich, denjenigen Teil der Seitenwand 30, der sich in Nähe des vorderen und hinteren Rades der angehobenen Seite des Fahrzeugs 20 befindet, unter den angehobenen Rädern 32 durchzuziehen. Anschließend wird derselbe Vorgang auf der anderen Seite wiederholt. Wo die Räder 32 jeweils auf dem Boden 28 zu positionieren sind, wird durch Markierungen 52 vorgegeben, die auf der Oberseite (Innenseite) des Bodens 28 angebracht sind. Damit befindet sich die Seitenwand 30 außerhalb der Räder 32 des Fahrzeugs 20. Dies zeigt Figur 3.

Nun kann entsprechend dem Verfahrensmerkmal D. die Seitenwand 30 rings um das Fahrzeug 20 angehoben werden. Figur 4 zeigt einen Zwischenzustand, die Seitenwand 30 ist nur teilweise angehoben. Drei Pfeile deuten an, wie weiter angehoben wird. Das Anheben wird fortgeführt, bis über dem Dach des Fahrzeugs 20 der obere Rand 34 der Seitenwand 30 durchgängig, also rings um zusammengefasst werden kann. Dies erfolgt mit einem, ein Sicherungsmittel bildenden Seil 36, das den oberen Rand 34 fixiert. Das Seil 36 ist in einer Führung 38, insbesondere Laschen, mit dem oberen Rand 34 verbunden. Diese Laschen sichern die Position des Seils 36 relativ zum oberen Rand 34, erlauben aber eine Bewegung des Seils 36 in seiner Längsrichtung. Die Führung 38 hat eine Öffnung, aus der das Seil 36 heraustritt. Dort kann an den Enden des Seils 36 gezogen werden und dieses straff gespannt werden. Das Seil 36 bildet eine Schlaufe 40 oder ein entsprechendes Mittel, um einen Haken 42 oder dergleichen einer Hebevorrichtung 44 aufzunehmen. Diese ist in der Lage, den gefüllten Sack 24, wie er in Figur 5 dargestellt ist, anzuheben und auch zu transportieren. Hierzu wird auf den Pfeil unterhalb der Hebevorrichtung 44 verwiesen.

Vor oder nach dem Schließen des Sacks 24 im Bereich seines oberen Randes 34 wird damit begonnen, Wasser 46 in den Sack 24 einzuleiten. Hierfür ist beispielsweise ein Schlauch 48 vorgesehen, der durch den oberen, zusammengefassten Bereich 50 hindurch in den Innenraum führt. Dieser Schlauch 48 kann, wenn er ausreichend lang ausgebildet ist, auch zum Abpumpen des Wassers verwendet werden.

Figur 6 zeigt einen Zuschnitt für den Sack 24. Dieser Zuschnitt ist zweiteilig. Er besteht aus einem ersten Teil für den Boden 28. Auf diesem Teil sind Markierungen 52 angebracht, auf denen die Räder 32 positioniert werden sollen. Zusätzlich zu den Markierungen 52 für Aufstandsflächen der Räder 32 des Kraftfahrzeugs ist auf der unten in Figur 6 dargestellten Innenseite des Bodens 28 auch eine einzige Markierung vorgesehen, beispielsweise ein Kreuz, auf welcher Markierung die Mitte der Autofront stehen soll, damit ein optimales Verpacken durch den Sack 24 möglich ist. Dadurch wird vorteilhaft ein Hinweis zum Verpacken eines Kraftfahrzeugs 20 unabhängig von der Breite und Länge des Kraftfahrzeugs 20 bereitgestellt.

Der Zuschnitt besteht weiterhin aus einem zweiten Teil für die Seitenwand 30. Diese hat zwei später im Wesentlichen zur x-z-Ebene parallele Seitenbereiche 54 und zwei später im Wesentlichen zur y-z-Ebene parallele Endbereiche 56. In einem der Endbereiche 56 ist unten ein Auslassventil 58 vorgesehen. In dem oberen Rand 34 ist eine Führung 38 ausgebildet, sie ist im Ausführungsbeispiel durch eine Vielzahl von Laschen bzw. Schlaufen realisiert. Die beiden Seitenbereiche 54 haben einen nicht geradlinigen Verlauf des oberen Randes 34. Der Verlauf des oberen Randes ist V-förmig. Er kann auch in einem anderen Verlauf eingebuchtet sein, beispielsweise parabelförmig. Die kürzeste Höhe in z-Richtung ist etwa in der Mitte des Seitenbereichs 54. Durch diese Formgebung wird dem Umstand Rechnung getragen, dass eine Umschließung des Fahrzeugs 20 in der y-z-Ebene einen deutlich kürzeren Weg beansprucht als eine Umschließung in der x-z Ebene.

Es ist vorteilhaft, auch die Oberkante der Endbereiche 56 entsprechend eingebuchtet, also von außen gesehen konkav auszubilden. Die Bemessung für die Höhenabmessungen in z-Richtung ist wie folgt: An den Übergangsstellen von jeweils einem Endbereich 56 an den angrenzenden Seitenbereich 54 liegt die größte Höhe hₘₐₓ vor. Sie ist bestimmt durch eine Umfangslinie in Diagonalrichtung um das Fahrzeug 20, abzüglich einer Diagonalen des Bodens 28. Eine kleinere Höhe liegt im Bereich der Mitte der Endbereiche 56 vor, sie ist bestimmt durch eine Umfangslinie um das Fahrzeug 20 in der x-z-Ebene, abzüglich der Längenabmessung des Bodens 28. Die kleinste Höhe liegt im Bereich der Mitte der Seitenbereiche 54 vor, sie ist bestimmt durch eine Umfangslinie um das Fahrzeug 20 in der y-z Ebene, abzüglich der Breitenabmessung des Bodens 28.

Der Zuschnitt weist Lappen 60 auf, die an einem Teil vorgesehen sind und auf das andere Teil geklappt und dort befestigt werden.

Figur 5 zeigt zwei Polsterstreifen 62, die über äußeren Bereichen des Kraftfahrzeugs 20 angeordnet sind, an denen der Sack beschädigt werden könnte. Figur 4 zeigt eine Schutzeinrichtung 64 in Form von Gummiplatten, die sich dort unter dem Boden 28 befinden, wo die Räder 32 aufliegen. Dadurch soll vermieden werden, dass der Sack 24 Löcher bekommt durch spitze Gegenstände und dergleichen, die sich auf der Straße 22 und direkt unter den Rädern 32 befinden.

Bei dem Verfahren zum Abtransport und zur Passivierung eines havarierten, elektrisch angetriebenen Kraftfahrzeugs 20 wird ein faltbarer, flüssigkeitsdichter Sack 24, der a) Innenabmessungen aufweist, die größer sind als die Außenabmessungen des Kraftfahrzeugs 20, und der b) einen Boden 28 und eine mit diesem verbundene Seitenwand 30 aufweist, unter dem Kraftfahrzeug 20 angeordnet. Das Kraftfahrzeug 20 wird angehoben, so dass Räder 32 des Kraftfahrzeugs 20 in der Luft sind, und die Seitenwand 30 wird unter den Rädern 32 durchgezogen. Nun wird die Seitenwand 30 rings um das Kraftfahrzeug 20 angehoben und der Sack 24 in diesem Zustand mittels einer Hebevorrichtung 44 gehalten. Zuvor wurde begonnen, Wasser 46 in den Sack 24 einzufühlen. Der befüllte Sack 24 wird mittels der Hebevorrichtung 44 oder einer anderen, fahrbaren Hebevorrichtung 44 zu einem Lagerplatz transportiert, wo er für mindestens einige Stunden, vorzugsweise 72 Stunden, ruht. Das abgestellte Kraftfahrzeug 20 kann in dem befüllten Sack 24 auch bis zu einer Woche abgestellt verbleiben, um die Sicherheit zu erhöhen, dass im Anschluss ein erneutes Auftreten eines Brandes stattfindet.

In den unterschiedlichen Figuren sind hinsichtlich ihrer Funktion gleichwertige Teile stets mit denselben Bezugszeichen versehen, sodass diese in der Regel auch nur einmal beschrieben werden.

### Bezugszeichenliste

- 20: Fahrzeug, Kraftfahrzeug
- 22: Straße, Aufstandsfläche
- 24: Sack
- 26: Hebekissen
- 28: Boden
- 30: Seitenwand
- 32: Rad
- 34: oberer Rand
- 36: Seil
- 38: Führung
- 40: Schlaufe
- 42: Haken
- 44: Hebevorrichtung
- 46: Wasser
- 48: Schlauch
- 50: zusammengefasster Bereich
- 52: Markierung
- 54: Seitenbereich
- 56: Endbereich
- 58: Auslassventil
- 60: Lappen
- 62: Polsterstreifen
- 64: Schutzeinrichtung

## Patentansprüche

1. Verfahren zum Abtransport und zur Passivierung eines havarierten, elektrisch angetriebenen Kraftfahrzeugs (20) mit folgenden Verfahrensschritten:
A. Bereitstellen eines faltbaren, flüssigkeitsdichten Sacks (24), der a) Innenabmessungen aufweist, die größer sind als die Außenabmessungen des Kraftfahrzeugs (20), und der b) einen Boden (28) und eine mit diesem verbundene Seitenwand (30) aufweist, wobei auf der Innenseite des Bodens (28) zumindest eine einzige Markierung zur mittigen Positionierung der Mitte der Autofront des Kraftfahrzeugs (20) vorgesehen ist, damit ein optimales Verpacken durch den Sack möglich ist,
B. Anordnen des Sacks (24) unter dem Kraftfahrzeug (20),
C. Anheben des Kraftfahrzeugs (20), so dass alle Räder (32) des Kraftfahrzeugs (20) in der Luft sind, und Durchziehen der Seitenwand (30) unter den Rädern (32), so dass sich nur noch der Boden (28) unterhalb der Räder (32) befindet, und Ablassen des Fahrzeugs (20), so dass die Räder (32) in Kontakt mit dem Boden (28) sind, wobei die Räder (32) nacheinander angehoben werden und folgende Verfahrensschritte durchgeführt werden:
- zunächst Anheben einer Seite des Kraftfahrzeugs (20), indem lediglich zwei seitliche Räder (32) des Kraftfahrzeugs (20) angehoben werden, so dass die beiden seitlichen Räder (32) dieser Seite in der Luft sind, Durchziehen eines Teils der Seitenwand (30) unter den in der Luft befindlichen Rädern (32), so dass sich unter diesen seitlichen Rädern (32) nur noch der Boden (28) des Sacks (24) befindet, und Ablassen der angehobenen Räder (32), und
- Anheben der anderen Seite des Kraftfahrzeugs (20), so dass die anderen beiden seitlichen Räder (32) dieser Seite in der Luft sind, Durchziehen eines Teils der Seitenwand (30) unter den in der Luft befindlichen Rädern (32), so dass sich unter diesen seitlichen Rädern (32) nur noch der Boden (28) befindet, und Ablassen der angehobenen Räder (32) auf den Boden (28),
D. Anheben der Seitenwand (30) rings um das Kraftfahrzeug (20) und Sichern des Sacks (24) in diesem Zustand,
E. Einfüllen von Wasser (46) in den Sack (24),
F. Gegebenenfalls Anheben des so befüllten Sacks (24) mittels einer, vorzugsweise fahrbaren, Hebevorrichtung (44) und Transport zu einem Lagerplatz, und
G. Ruhenlassen des befüllten Sacks (24) für mindestens einige Stunden.

2. Verfahren nach Anspruch 1, **dadurch gekennzeichnet, dass** äußere Bereiche des Kraftfahrzeugs (20), die scharfkantig und/oder heiß sind, durch Polsterstreifen (62) überklebt werden.

3. Verfahren nach einem der vorangegangenen Ansprüche, **dadurch gekennzeichnet, dass** mindestens eine Schutzeinrichtung (64) vorgesehen ist, die unterhalb des Bodens (28) an den Stellen angeordnet wird, an denen sich oberhalb des Bodens (28) die Räder (32) befinden, vorzugsweise ist diese Schutzeinrichtung (64) als eine faltbare Schutzplane ausgebildet.

4. Verfahren nach einem der vorangegangenen Ansprüche, **dadurch gekennzeichnet, dass** im Schritt D. oder F. ein umlaufender, oberer Randbereich (34) der Seitenwand (30) mit einem Sicherungsmittel (36) außen umgriffen wird, und das vorzugsweise das Sicherungsmittel (36) eine Öse oder Schlaufe (40) für einen Haken (42) der Hebevorrichtung (44) aufweist.

5. Verfahren nach einem der vorangegangenen Ansprüche, **dadurch gekennzeichnet, dass** das Anheben des Sacks (24) gemäß Schritt D. an einer einzigen Stelle, vorzugsweise mit einem Seil (36) als Sicherungsmittel erfolgt.

## Claims

1. Method for removing and passivating a damaged, electrically driven motor vehicle (20), comprising the following method steps:
A. Providing a foldable, liquid-tight bag (24) which a) has internal dimensions which are larger than the external dimensions of the motor vehicle (20), and which b) has a base (28) and a side wall (30) connected thereto, at least a single mark being provided on the inside of the base (28) for central positioning of the centre of the front of the motor vehicle (20) so that optimum packing by the bag is possible,
B. Placing the bag (24) under the motor vehicle (20),
C. Raising the motor vehicle (20) so that all the wheels (32) of the motor vehicle (20) are in the air and pulling the side wall (30) under the wheels (32) so that only the ground (28) is below the wheels (32) and lowering the vehicle (20) so that the wheels (32) are in contact with the ground (28), the wheels (32) being raised one after the other and the following steps being carried out:
- first lifting one side of the motor vehicle (20) by lifting only two lateral wheels (32) of the motor vehicle (20) so that the two lateral wheels (32) of this side are in the air, pulling a part of the side wall (30) under the wheels (32) in the air so that only the bottom (28) of the bag (24) is under these lateral wheels (32), and lowering the raised wheels (32), and
- raising the other side of the motor vehicle (20) so that the other two lateral wheels (32) of this side are in the air, pulling a part of the side wall (30) under the wheels (32) in the air so that only the floor (28) is under these lateral wheels (32), and lowering the raised wheels (32) onto the floor (28),
D. Lifting the side wall (30) around the motor vehicle (20) and securing the bag (24) in this state,
E. Filling water (46) into the bag (24),
F. If necessary, lifting the bag (24) filled in this way by means of a preferably mobile lifting device (44) and transporting it to a storage location, and
G. Leaving the filled bag (24) to rest for at least a few hours.

2. Method according to claim 1, **characterised in that** outer areas of the motor vehicle (20) which are sharp-edged and/or hot are covered by buffer strips (62).

3. Method according to one of the preceding claims, **characterised in that** at least one protective device (64) is provided, which is arranged below the floor (28) at the points at which the wheels (32) are located above the floor (28), preferably this protective device (64) is designed as a foldable protective tarpaulin.

4. Method according to one of the preceding claims, **characterised in that** in step D. or F. a peripheral, upper edge region (34) of the side wall (30) is encompassed on the outside by a securing means (36), and **in that** preferably the securing means (36) has an eyelet or loop (40) for a hook (42) of the lifting device (44).

5. Method according to one of the preceding claims, **characterised in that** the lifting of the bag (24) according to step D. takes place at a single point, preferably with a rope (36) as securing means.

## Revendications

1. Procédé destiné à l'évacuation et à la passivation d'un véhicule à propulsion électrique endommagé (20) avec les étapes de procédé suivantes :
A. préparation d'un sac pliable, étanche aux liquides (24), qui a) comporte des dimensions intérieures, qui sont plus grandes que les dimensions extérieures du véhicule (20), et qui b) comporte un fond (28) et une paroi latérale (30) reliée à celui-ci, sachant que sur le côté intérieur du fond (28) est prévu au moins un marquage unique pour le positionnement central du centre de l'avant du véhicule (20) afin qu'un emballage optimal par le sac soit possible,
B. Mise en place du sac (24) sous le véhicule (20),
C. Soulèvement du véhicule (20) de telle manière que toutes les roues (32) du véhicule (20) soient en l'air et tirage en traction de la paroi latérale (30) sous les roues (32), de telle sorte que seul le fond (28) se trouve encore en dessous des roues (32), et descente du véhicule (20) de telle manière que les roues (32) soient en contact avec le fond (28), sachant que les roues (32) sont soulevées l'une après l'autre et que les étapes de procédé suivantes sont effectuées :
- d'abord soulèvement d'un côté du véhicule (20), seulement deux roues latérales (32) du véhicule (20) étant soulevées de telle manière que les deux roues latérales (32) de ce côté sont en l'air, tirage par traction d'une partie de la paroi latérale (30) sous les roues (32) se trouvant en l'air de telle sorte que seul le fond (28) du sac (24) se trouve encore sous ces roues latérales (32) et descente des roues (32) soulevées, et
- soulèvement de l'autre côté du véhicule (20) de telle manière que les deux autres roues latérales (32) de ce côté sont en l'air, tirage par traction d'une partie de la paroi latérale (30) sous les roues (32) se trouvant en l'air, de telle sorte que seul le fond (28) se trouve encore sous ces roues latérales (32) et descente des roues soulevées (32) sur le fond (28),
D. soulèvement de la paroi latérale (30) tout autour du véhicule (20) et sécurisation du sac (24) dans cet état,
E. remplissage d'eau (46) dans le sac (24),
F. le cas échéant, soulèvement du sac ainsi rempli (24) au moyen d'un dispositif de levage (44) de préférence mobile et transport vers un emplacement de stockage, et
G. laisser le sac rempli (24) au repos pendant au moins plusieurs heures.

2. Procédé selon la revendication 1, **caractérisé en ce que** les zones extérieures du véhicule (20), qui sont à angles vifs et/ou chaudes, sont surcollées par des bandes de rembourrage (62).

3. Procédé selon l'une quelconque des revendications précédentes, **caractérisé en ce qu'**au moins un système de protection (64) est prévu, qui est disposé en dessous du fond (28) aux endroits auxquels se trouvent les roues (32) au-dessus du fond (28), ce système de protection (64) est de préférence constitué sous la forme d'une bâche de protection pliante.

4. Procédé selon l'une quelconque des revendications précédentes, **caractérisé en ce que** dans l'étape D ou F, une zone de bordure (34) supérieure, périphérique de la paroi latérale (30) est saisie extérieurement par enveloppement avec un moyen de sécurisation (36) et que de préférence le moyen de sécurisation (36) comporte un anneau ou une boucle (40) pour un crochet (42) du dispositif de levage (44).

5. Procédé selon l'une quelconque des revendications précédentes, **caractérisé en ce que** le soulèvement du sac (24) a lieu selon l'étape D à un endroit unique, de préférence avec un câble (36) en tant que moyen de sécurisation.
